# EUROPEAN PATENT SPECIFICATION

(11) **EP 4 456 730 B1**
(45) Date of publication and mention of the grant of the patent: **29.04.2026**
(21) Application number: 22843348.8
(22) Date of filing: 22.12.2022
(51) Int. Cl.: A23G 1/52, A23G 1/54, A23G 3/52, A23G 3/54, A23P 30/40, A23G 1/00

(54) **PROCESS FOR PRODUCING AN AERATED CHOCOLATE PRODUCT**
VERFAHREN ZUR HERSTELLUNG EINES BELÜFTETEN SCHOKOLADENPRODUKTS
PROCÉDÉ DE PRODUCTION D'UN PRODUIT DE CHOCOLAT AÉRÉ

(30) Priority: 29.12.2021 EP 21218098
(43) Date of publication of application: 06.11.2024
(73) Proprietor: Société des Produits Nestlé S.A., 1800 Vevey (CH)
(72) Inventor: GERMAN, Jamey, York Yorkshire YO23 1NX (GB); LEADBEATER, Richard John, York Yorkshire YO23 1NX (GB)
(74) Representative: Slaven, John William
(86) International application number: PCT/EP2022/087629
(87) International publication number: WO 2023/126325

(56) References cited:
- WO-A1-2013/092643
- WO-A1-2016/198659
- WO-A1-2018/206470
- GB-A- 2 128 924

## Description

### FIELD OF THE INVENTION

The present invention relates to a process for producing a non-moulded aerated chocolate product.

### BACKGROUND OF THE INVENTION

Aerated food products are particularly advantageous from a commercial standpoint. One of the reasons for this is the drive for the development of confectionery which provide products having a low weight to volume ratio, i.e. providing a product having the same size impression but with less chocolate, and hence reduced calories. Aerated chocolate products also provide a different taste and mouthfeel, since the reduction in density due to the air bubbles leads to a product with a novel texture which more readily melts in the mouth, which contributes to an improved taste sensation.

WO 2018/206470 A1 discloses a process for preparing an aerated edible food composition having inclusions dispersed therein.

Conventionally, aerated chocolate products are generally produced using an aerator to introduce air into a chocolate composition under positive pressure (i.e. above atmospheric pressure), followed by depositing the aerated composition into a mould. The aerated composition, now under atmospheric pressure in the mould, froths and expands within the mould cavity to form the bubble structure characteristic of aerated products. Beckett's Industrial Chocolate Manufacture and Use, 4th Edition, Wiley-Blackwell, 2009 provides a description of such a method in Chapter 17, section 17.7.3.

The moulds constrain the expansion of the aerated product in order to ensure a consistent final product size and shape, which is expected by consumers. Typically, the aerated product may be deposited onto an unaerated shell within the mould, and on the top surface after deposition of the aerated product, in order to provide a smooth outer surface. However, one drawback of using moulds is that the removal of the final aerated product from the mould can be challenging. Moreover, the conventional processes for making an aerated chocolate product, such as described above, typically require the deposition of the aerated chocolate into a non-aerated shell and overcoating the top face of the aerated layer with a non-aerated chocolate layer, and hence is a multistep procedure which is labour intensive and hence less economical.

Further, deposition of an aerated product can result in a "tail" of aerated chocolate forming on the surface of the deposited chocolate product. This tail may subsequently degas and turn darker in colour. This phenomenon, whilst not affecting the taste of the final product, can lead to a dark patch on the base of the final aerated product, which would be perceived negatively by consumers. In the above-described aerated chocolate products that are deposited into a non-aerated chocolate shell, the provision of a non-aerated chocolate layer on the top face of the aerated layer would cover such a tail. However, it would be desirable to provide a process for making an aerated chocolate product that avoids the above-described multistep processes that require first forming a non-aerated chocolate shell and/or a non-aerated chocolate layer over the deposited aerated chocolate.

In the production of non-aerated products, such as chocolate buttons, any "tail" formed during deposition of the chocolate composition can be readily removed by mechanical means, for example, by vibrating the product. However, in the case of an aerated chocolate product, excessive vibration in order to remove the tail is undesirable as it can cause deaeration of the product. In particular, excessive vibration can cause air bubbles at the surface of the product to burst, which can lead to the surface of the product having an undesirable "pock-marked" appearance (i.e. the appearance of small indents, or pits), which is unacceptable from a consumer viewpoint. Moreover, in the case of a non-moulded aerated product, excess vibration can also cause undesirable spreading of the product over the deposition surface.

Accordingly, there is a need to provide efficient methods of manufacturing an aerated chocolate product that reduce, ameliorates or eliminates one or more of the above problems.

### SUMMARY OF THE INVENTION

The applicant has now surprisingly found that a process wherein a pressurised aerated chocolate composition is deposited directly onto a surface (such as a moving belt in a production line) without the use of a mould is technically and commercially viable, contrary to conventional understanding in the field. In such a process the deposited aerated composition is allowed to expand to form the final product unconstrained by a mould. This new process removes the need to release the final product from the mould, thus simplifying and improving the efficiency of production. To the applicant's knowledge, no such process has been disclosed prior to the present disclosure. Hence, the process provides an efficient production of an aerated chocolate product which is suitable for large scale manufacture, without the disadvantages associated with moulded aerated chocolate products.

Through further extensive investigations into the above problems, the applicant also identified a process of preparing an aerated food product that addresses the issues of surface marks caused by the "tail" and the formation of a pock-marked surface caused by excessive vibration to remove the tail. The process is conducted using parameters which result in sufficient expansion of the aerated product so as to envelope the "tail" in the deposited aerated chocolate product, thus preventing the formation of a dark patch on the surface of the product. Importantly, the process also results in a product with a consistent size and shape.

According to a first aspect of the invention, a process for preparing a non-moulded aerated chocolate product is provided, the process comprising:
aerating a chocolate composition in an aerator operating under a positive pressure of from about 500 kPa (5 bar) to about 1200 kPa (12 bar) to provide an aerated chocolate composition;
passing the aerated chocolate composition from the aerator to a depositor operating under a positive pressure, wherein the depositor comprises at least one nozzle comprising an outlet orifice for depositing the aerated chocolate composition, wherein the depositor is configured to allow the reversible opening and closing of the outlet orifice;
opening the outlet orifice for a predetermined deposit time period to deposit a portion of the aerated chocolate composition through the outlet orifice onto a surface, wherein the aerated chocolate composition is deposited onto the surface at a height of from about 40 mm to about 100 mm; and
allowing the deposited aerated chocolate composition to expand under atmospheric pressure and cooling to form the non-moulded aerated chocolate product, wherein the cooling step comprises:
passing the deposited aerated chocolate composition to the first zone of a two zone cooler to form a partially cooled deposited aerated chocolate composition; and
passing the partially cooled deposited aerated chocolate composition to a second zone of the two zone cooler;
wherein the first zone of the two-zone cooler has a temperature of about 5°C to about 20°C, preferably about 4°C to about 10°C, more preferably about 6°C to about 8°C, most preferably about 7°C; and the second zone of the two-zone cooler has a temperature of about 5°C to about 20°C, preferably about 4°C to about 15°C, more preferably about 6°C to about 12°C, most preferably about 10°C.

By preparing a non-moulded aerated chocolate product according to the process of the invention an aesthetically pleasing aerated product can be achieved whilst avoiding the drawbacks of using moulds.

According to a second aspect not part of the invention, a non-moulded aerated chocolate product is provided, wherein the non-moulded aerated chocolate product is obtained by the process of the invention as described below.

In a particularly preferred embodiment, a process for preparing a non-moulded aerated chocolate product is provided, the process comprising:
aerating a chocolate composition in an aerator operating under a positive pressure of from about 500kPa (5 bar) to about 1200 kPa (12 bar) to provide an aerated chocolate composition;
passing the aerated chocolate composition from the aerator to a depositor operating under a positive pressure of about 500 kPa (5 bar) to 1200 kPa (12 bar), wherein the depositor comprises at least one nozzle comprising an outlet orifice for depositing the aerated chocolate composition, wherein the depositor is configured to allow the reversible opening and closing of the outlet orifice,
optionally wherein the outlet orifice has a length of from about 2 mm to about 8 mm and a diameter of from about 1 mm to about 4 mm;
opening the outlet orifice for a deposit time period of about 20 milliseconds to about 90 milliseconds to deposit a portion of the aerated chocolate composition through the outlet orifice onto a surface, wherein the aerated chocolate composition is deposited onto the surface at a height of from about 40 mm to about 100 mm; and
allowing the deposited aerated chocolate composition to expand under atmospheric pressure and optionally cooling to form the non-moulded aerated chocolate product, wherein the cooling step comprises:
   passing the deposited aerated chocolate composition to the first zone of a two zone cooler to form a partially cooled deposited aerated chocolate composition; and
   passing the partially cooled deposited aerated chocolate composition to a second zone of the two zone cooler;
   wherein the first zone of the two-zone cooler has a temperature of about 5°C to about 20°C, preferably about 4°C to about 10°C, more preferably about 6°C to about 8°C, most preferably about 7°C; and the second zone of the two-zone cooler has a temperature of about 5°C to about 20°C, preferably about 4°C to about 15°C, more preferably about 6°C to about 12°C, most preferably about 10°C.

### DETAILED DESCRIPTION OF THE INVENTION

### Definitions

In the discussion of the invention herein, unless stated otherwise, the disclosure of alternative values for the upper and lower limit of the permitted range of a parameter coupled with an indicated that one of said values is more preferred than the other, is to be construed as an implied statement that each intermediate value of said parameter, lying between the more preferred and less preferred of said alternatives is itself preferred to said less preferred value and also to each less preferred value and said intermediate value.

The term "comprising" as used herein will be understood to mean that the list following is non exhaustive and may or may not include any other additional suitable items, for example one or more further feature(s), component(s), ingredient(s) and/or substituent(s) as appropriate. Thus the words "comprise", "comprising" and the like are to be construed in an inclusive sense as opposed to an exclusive or exhaustive sense; that is to say, in the sense of "including, but not limited to". It should be noted that embodiments and features described in the context of one of the aspects of the present invention also apply to the other aspects of the invention.

In general the terms "product" and "composition" (such as "chocolate composition") and "chocolate product") may be used interchangeably herein unless the context clearly indicates otherwise, the difference between them being generally that a "product" is in a final or almost final form ready or acceptable to be commercialized and eaten by an end consumer and is typically sold under a brand name. Thus, a product may have a plurality of different domains and textures of which a composition may comprise only one part. A composition (which may also be a product) may also be a component and/or ingredient used to prepare a product.

As used herein, the term "non-moulded" aerated product refers to an aerated product that has been formed without the use of a mould or other such device to constrain the expansion of the aerated composition following deposition onto a surface. That is, the process of preparing a "non-moulded" aerated product does not involve the use of a mould. Similarly, in the context of the present disclosure a "surface" refers to a surface that is not shaped to constrain the expansion of the deposited aerated chocolate composition to a particular shape/size (e.g. a mould), but rather allows free expansion of the product. For example, the surface may be a substantially or essentially flat surface, for example a substantially planar or essentially planar surface. It is understood that a substantially or essentially flat surface or a substantially planar or essentially planar surface means that the surface does not contain any indentations or protrusions, such as wells, hollows, or recesses containing walls, that would act as a receptacle to contain the product and thereby restrict the expansion of the product either horizontally or vertically. Thus, whilst a substantially or essentially flat surface, a substantially planar or essentially planar surface should not contain a moulded surface that would act as a receptacle for the deposited aerated chocolate composition, the surface may nevertheless contain small surface markings or patterns. Preferably the surface is substantially flat and is substantially smooth (e.g. substantially free of surface markings or patterns), or is substantially planar and is substantially smooth. A particularly suitable surface is a moving belt of a production line).

As used herein, the term "porosity" refers to the degree of aeration by volume of the chocolate product. Porosity can be measured by comparing the weight of a defined volume of non-aerated product to the weight of the same volume following aeration, the % difference corresponding to the porosity level.

In preferred embodiments, the aeration may be measured as follows:
1. Porosity is measured using a sampling point after aeration. The weight of a defined volume of non-aerated chocolate is compared to the weight of the same volume following aeration, the % difference corresponding to the porosity level.
2. X-ray tomography on the solid bars, to determine the porosity and bubble size distribution.
3. A density balance may also be used.

Preferably when degree/amount etc. of "aeration" is mentioned, this is porosity.

As used herein, the term "positive pressure" refers to a pressure that is above atmospheric pressure.

As used herein, the term "at substantially the same pressure" means that the two target pressures for the aerator and depositor are the same, allowing for the usual minor fluctuations of pressure when in use. For example, substantially the same pressure can mean a pressure of: ± 0.5 bar (50 kPa), ± 0.2 bar (20 kPa), ± 0.1 bar (10 kPa), or ± 0.05 bar (5 kPa).

As used herein, the term "substantially circular" refers to a shape that is circular within the usual manufacturing tolerances. That is, the shape would be viewed by end consumers as being circular (e.g. a confectionery button product) even if the shape is not perfectly circular. As used herein, the term "macro-aerated" refers to an aerated product where the air bubbles are visible to the naked eye, typically with an average diameter of 100 microns or above. This is in contrast to "micro-aerated" products, where the bubbles are sufficiently small so the bubbles are not visible to the naked eye, typically with an average bubble diameter of less than 100 microns.

### Chocolate composition

As used herein, the term "chocolate composition" refers to a liquid, semi-liquid or semi-solid chocolate composition.

In a particularly preferred embodiment, the chocolate composition is a tempered chocolate composition and thus the non-moulded aerated chocolate product produced by the process of the invention is a non-moulded aerated chocolate product.

When the chocolate composition is a tempered chocolate composition, the temper index of the tempered chocolate composition is preferably about 3 to about 9, more preferably from about 4 to about 8, and most preferably from about 5 to about 8. The crystallisation temperature range of the tempered chocolate composition is preferably from about 15°C to about 30°C, more preferably from about 18°C to about 27°C, most preferably from about 20°C to about 25°C, and particularly from about 21°C to about 23°C.

Unless otherwise indicated, the term chocolate, when referring to a chocolate composition or chocolate product, includes chocolate or a chocolate compound. Independent of any other legal definitions that may be used compositions that comprises a cocoa solids content of from about 25% to about 35% by weight together with a milk ingredient (such as milk powder) may be informally referred to herein as 'milk chocolate' (which term also encompasses other analogous chocolate products, with similar amounts of cocoa solids or replacements therefor). Independent of any other legal definitions that may be used compositions of the invention that comprises a cocoa solids content of more than about 35% by weight (up to 100% (i.e. pure cocoa solids) may be informally referred to herein as 'dark chocolate' (which term also encompasses other analogous chocolate products, with similar amounts of cocoa solids or replacements therefor).

The term 'chocolate' as used herein denotes any product (and/or component thereof if it would be a product) that meets a legal definition of chocolate in any jurisdiction and also includes products (and/or component(s) thereof in which all or part of the cocoa butter (CB) is replaced by cocoa butter equivalents (CBE) and/or cocoa butter replacers (CBR).

The term 'chocolate compound' as used herein (unless the context clearly indicates otherwise) denote chocolate like analogues characterized by presence of cocoa solids (which include cocoa liquor/mass, cocoa butter and cocoa powder) in any amount, notwithstanding that in some jurisdictions compound may be legally defined by the presence of a minimum amount of cocoa solids.

The term 'chocolate product' as used herein denotes chocolate, compound and other related materials that comprise cocoa butter (CB), cocoa butter equivalents (CBE), cocoa butter replacers (CBR) and/or cocoa butter substitutes (CBS). Thus, chocolate product includes products that are based on chocolate and/or chocolate analogues, and thus for example may be based on dark, milk or white chocolate.

Unless the context clearly indicates, otherwise it will also be appreciated that in the present invention, any one chocolate product may be used to replace any other chocolate product and neither the term chocolate nor compound should be considered as limiting the scope of the invention to a specific type of chocolate product. Preferred chocolate product comprises chocolate and/or compound, more preferred chocolate product comprises chocolate, most preferred chocolate product comprises chocolate as legally defined in a major jurisdiction (such as Brazil, EU and/or US).

In chocolate product confectionery, the cocoa butter (CB) may be replaced by fats from other sources. Such products may generally comprise one or more fat(s) selected from the group consisting of: lauric fat(s) (e.g. cocoa butter substitute (CBS) obtained from the kernel of the fruit of palm trees); non-lauric vegetable fat(s) (e.g. those based on palm or other specialty fats); cocoa butter replacer(s) (CBR); cocoa butter equivalent(s) (CBE) and/or any suitable mixture(s) thereof. Some CBE, CBR and especially CBS may contain primarily saturated fats and very low levels of unsaturated omega three and omega six fatty acids (with health benefits). Thus in one embodiment in chocolate product confectionery of the invention such types of fat are less preferred than CB.

Unless otherwise indicated, the term "chocolate product" refers to a product containing chocolate as defined herein, wherein the product is solid at room temperature.

### Aeration

Unless otherwise indicated herein, in the embodiments and examples of the invention described herein used to deposit aerated compositions such as an aerated chocolate composition, the aeration was achieved using an aerator of the type as described in more detail in WO 2005/063036. It will be appreciated that this equipment is by way for example only and non-limiting and other suitable aerators known to those skilled in the art could also be used.

The chocolate composition may be transported by at least two pumps to pass an injection site being located between said pumps. Advantageously, by injecting gas between two pumps the pressure at the injection site may be lower than and/or shielded from the pressure in the rest of the apparatus. Inert gas may be dispersed into the fluid by injection at the injection site at high gas pressure (greater than atmospheric pressure).

More usefully the gas pressure at the injection site may be less than or equal to 9 bar (900 kPa) and/or the system pressure may be at least 9 bar (900 kPa) after the injection site. Most usefully suitable gas injectors may comprise those gas injectors as defined herein and/or are described in WO2005/063036.

Preferably, the depositor used in the process of the invention is a jet depositor. As used herein the term 'jet depositor' refers to an apparatus for depositing a chocolate composition (e.g. a liquid, semi-liquid or semi-solid chocolate) under positive pressure (i.e. pressure above ambient pressure). A preferred jet depositor comprises a reciprocating valve spindle to deposit the chocolate and/or is as described in the applicant's patent application WO2010/102716.

For preparing the aerated chocolate product of the present invention aerators such as that described in WO2005/063036 offer several advantages. Firstly, the gas injection is effectively isolated from any pressure fluctuations occurring in the rest of the system. This gives a more stable gas flow into the product. Secondly, these injectors can optionally operate at higher pressures compared to conventional rotor stator systems (e.g. about 9 bar (900 kPa) is a typical operating pressure for a WO2005/063036 injector compared to about 6 bar (600 kPa) typical operating pressure for a mixer using a rotor stator mixing head such as a Mondomix^{®} mixer). When an aerator is attached to a jet depositor, this is additionally useful as higher flow rates can be delivered with consequent faster line speeds. Thirdly, the whole system is fully pressurised up to the point of deposit. This results in significant advantages described herein such as optimising final aeration quality and reducing the opportunity for bubble coalescence.

In a preferred embodiment of the aeration step, the gas is dispersed into the chocolate composition, preferably a tempered chocolate composition, at a volume flow rate of from greater than about 0.25 I/min, preferably greater than about 0.4 I/min, preferably greater than about 0.6 I/min. In a preferred embodiment, the volume flow rate is less than about 1.5 I/min, preferably less than about 1.25 I/min or less than about 1.0 I/min. Accordingly, in an embodiment of the present invention, the volume flow rate is from about 0.25 I/min and about 1.5 I/min, preferably from about 0.4 I/min to about 1.25 I/min, more preferably from about 0.6 I/min to about 1.0 I/min.

The aerator operates under a positive pressure of from about 5 bar (500 kPa) to about 12 bar (1200 kPa), preferably from about 6 bar (600 kPa) to about 12 bar (1200 kPa), or from about 7 bar (700 kPa) to about 12 bar (1200 kPa). Preferably, the aerator operates under a positive pressure of from about 7 bar (700 kPa) to about 12 bar (1200 kPa).

In a preferred embodiment, the chocolate composition, preferably a tempered chocolate composition, is aerated in the aerator when the composition is at a temperature of from about 26°C to about 33°C, more usefully from about 28°C to about 32°C, most preferably from about 29°C to about 31°C.

It will be appreciated that to achieve a desired gas flow and temperature, other parameters of the specific equipment used may need to potentially be adjusted (such as mixer speed, system pressure and/or jacket temperature). How to do so for a particular system (to achieve any given gas flow and temperature target) will be within the skill of a skilled person in the art in view of the disclosures of this specification.

In an embodiment of the present invention the throughput of the liquid may be controlled as appropriate, for example between about 25 kg/hr to about 500 kg/hr or indeed between about 1000kg/hr to about 4500kg/hr. The gas flow rate and other process parameters may be controlled as appropriate to yield the desired product.

Suitable gases for the aeration can be any inert gas, such as nitrogen, carbon dioxide, nitrous oxide, argon, or air.

### Deposition

The depositor of the present invention comprises at least one nozzle comprising an outlet orifice for depositing the aerated chocolate composition. The depositor is configured such that the outlet orifice in each nozzle can be reversibly opened and closed for a deposit time period such that during this period the aerated chocolate composition is deposited through the outlet orifice due to the positive pressure in the depositor. For example, the depositor described in WO 2010/102716 comprises a linear actuator that drives reciprocating movement of a valve spindle that opens and closes the outlet orifice of the depositor. However, this is only one example of such a depositor configuration and the skilled person will appreciate that other configurations allowing are equally suitable for carrying out the present invention.

The depositor operates under a positive pressure of from about 5 bar (500 kPa) to about 12 bar (1200 kPa), preferably from about 6 bar (600 kPa) to about 12 bar (1200 kPa), more preferably from about 7 bar (700 kPa) to about 12 bar (1200 kPa). In a preferred embodiment, the depositor operates under substantially the same pressure as the aerator.

According to any embodiment of the process, the temperature of the aerated chocolate composition in the depositor may be in the range of: about 24°C to about 36°C, preferably about 25°C to about 35°C, more preferably about 27°C to about 33°C, most preferably about 28°C to about 32°C, and in particular about 30°C.

In one embodiment, the outlet orifice of the nozzle has a length of from about 2 mm to about 8 mm, preferably from about 3 mm to about 7 mm, more preferably from about 4 mm to about 6 mm, and particularly about 5 mm. In one embodiment, the outlet orifice has a diameter of from about 1 mm to about 4 mm, preferably from about 1.5 mm to about 3.5 mm, more preferably from about 2 mm to about 3 mm, and particularly about 2.5 mm. In one particularly preferred embodiment, the outlet orifice of the nozzle has a length of about 5 mm and a diameter of about 2.5 mm. Without being bound by theory, it is believed that controlling the outlet orifice length and diameter within the above ranges aids in the production of substantially circular aerated chocolate products following deposition, even when using a static depositor that does not track a moving surface, such as a moving belt. In one embodiment, the aerated chocolate composition is deposited onto the surface at a height of from about 40 mm to about 100 mm, preferably of from about 50 mm to about 90 mm, more preferably from about 60 mm to about 80 mm.

In one embodiment, the deposit time period (i.e. the time for which the outlet orifice is opened to allow depositing of the aerated chocolate composition through the outlet orifice) is about 20 milliseconds to about 90 milliseconds, preferably from about 30 milliseconds to about 80 milliseconds, more preferably from about 40 milliseconds to about 60 milliseconds, and particularly from about 50 milliseconds to about 60 milliseconds.

As discussed above, an example of a suitable depositing apparatus is described in WO 2010/102716. The example apparatus comprises a fixed volume chamber for receiving the chocolate composition under a positive pressure, the chamber being defined by chamber walls, one of the chamber walls being provided with an outlet orifice for depositing the chocolate composition, the outlet orifice being provided with a first sealing surface. The apparatus also comprises a valve spindle arranged for reciprocating movement within the chamber, the length direction of the valve spindle extending substantially perpendicular to the chamber wall in which the outlet orifice is provided, a first end of the valve spindle being provided with a second sealing surface. The second sealing surface of the valve spindle is arranged for abutting the first sealing surface of the outlet orifice to thereby close the outlet orifice. This apparatus may be used in the process of the present invention and/or be operated in line with present invention to provide the aerated composition to the outlet orifice as described herein.

The example apparatus for depositing a chocolate composition comprises a fixed volume chamber for receiving the chocolate composition under a positive pressure in the range of about 4 bars (400 kPa) to about 12 bars (1200 kPa), such chocolate composition having already been aerated in the aerator before being transported to the chamber. The chamber may optionally further comprise a further aerating means (e.g. means to inject gas into the liquid optionally under high pressure) to further aerate the composition.

In the example depositor the chamber is provided with an inlet and an outlet for supplying the chocolate composition to the chamber from a pump and suitable pumps and supply lines will be apparent to those skilled in the art. The pump is configured to supply the chocolate composition to the chamber at a rate of, for example, approximately 125% of the intended depositing rate.

Sidewalls of the chamber may be are provided as a unitary body formed of, for example, a stainless steel casting. Bottom and top walls of the chamber, which are substantially flat, may be formed of, for example, stainless steel plates bolted and sealed to the sidewalls. The bottom wall of the chamber may be provided with a plurality of apertures having a two dimensional arrangement for producing a desired depositing pattern, for example a two dimensional arrangement of apertures may be provided in a regular row and column array of say 64 apertures. Other arrangements are, however, possible. A nozzle is fitted into each of the apertures and defines an outlet orifice through which the aerated chocolate composition is deposited. An inside surface of the nozzle may be provided with a conical surface, which surface serves as a first sealing surface. The apparatus may also comprise a plurality of valve spindles associated with respective outlet orifices and a plurality of linear pneumatic actuators associated with respective valve spindles.

Each valve spindle may be in the form of an elongate circular rod, or needle. A first (lower) end of the spindle may be provided with a conical surface which serves as a second sealing surface and is adapted for making sealing contact with the first sealing surface of a respective nozzle, as described above. The valve spindle may have a length slightly less than the internal height of the chamber (measured across the inner surfaces of the bottom and top plates of the chamber). A second (upper) end of the valve spindle may be attached to a respective actuator which is itself attached to the top plate of the chamber. The actuator may be attached to the top plate of the chamber such that it can be accessed for repair or replacement without significant disassembly of the apparatus.

The actuators and valve spindles may be arranged with their axes perpendicular to the bottom and top plates such that the actuators can be operated to longitudinally displace the valve spindles relative to the chamber walls with reciprocating movement. The valve spindles may be arranged such that, with the valve spindles in their upper position, the outlet orifices are open so the chocolate composition is deposited. With the valve spindles in their lower position, the sealing surfaces of the nozzle components and the valve spindles may be in sealing contact to thereby close the outlet orifices and prevent the flow of the chocolate composition. The actuators may be operated independently so that the flow of chocolate composition can be varied between different outlet orifices, with a selectable number of the outlet orifices being open at any one time.

The actuators may be each connected to a pneumatic circuit (not shown) for providing linear movement and a controller (not shown) for controlling the pneumatic circuits. Suitable pneumatic circuits will be known to those skilled in the art. Suitable controllers include programmable logic controllers and suitably programmed computers.

In use of the apparatus the controller may be arranged to control the actuators to independently open and close the respective outlet orifices for starting and stopping the deposition of the chocolate composition. The flow rate of the chocolate composition through the outlet orifices may be controlled by opening and closing the outlet orifices in a cycle having a frequency of at least 2 Hz, and by varying the proportion of the cycle time in which the outlet orifice is open (i.e. varying the mark-space ratio).

The flow rate of the chocolate composition through the outlet orifices may also depend, at least in part, on the pressure of the chocolate composition in the chamber. The controller may therefore be provided with the output from a pressure sensor (not shown), which measures the pressure in the chamber. The controller may control the actuators based on the sensed pressure.

Rather than pneumatic actuators, the actuators may alternatively be other types of actuator, such as moving coil electrical actuators. Moving coil electrical actuators may be capable of accurate positional control so that the flow rate of the chocolate composition through the outlet orifices can be varied by adjusting the linear position of the valve spindles.

The apparatus may be provided with a spreader plate attached to the bottom plate. The spreader plate may connect the outlet orifices to a larger plurality of spreader plate outlets. The spreader plate outlets may be provided with a pressure operated valve, the pressure operated valve being arranged to close when a pressure drops below a predetermined pressure greater than atmospheric pressure.

Commercially available piston or rotary valve depositors may be used, for example, those supplied by Buhler-Bindler or Knobel. Preferably, the depositor is a jet depositor of the type described above that does not use a piston to cause deposition of the aerated chocolate composition.

In some preferred embodiments, the surface upon which the aerated chocolate composition is deposited is a moving belt. In such embodiments, the moving belt may have a belt speed of about 0.1 metre per minute to about 10 metres per minute, preferably of about 1 metre per minute to about 8 metres per minute, more preferably of about 2 metres per minute to about 7 metres per minute, most preferably of about 3 metres per minute to about 5 metres per minute.

It will be appreciated that although the present invention avoids the need to use excess vibration to remove any "tail" formed during deposition of the chocolate composition, a certain amount of vibration may still be used in order to optimize the size of the deposited chocolate composition. The use of vibration for this purpose and the magnitude of vibration required is well understood in the art.

According to the process, the cooling step is carried out, i.e. the deposited chocolate composition is subjected to an active cooling. It was surprisingly found by the applicant that certain cooling conditions enabled the easier release of the final aerated product from the surface it was deposited on without leaving excess residue on the surface. The cooling step comprises:
passing the deposited aerated chocolate composition to the first zone of a two zone cooler to form a partially cooled deposited aerated chocolate composition; and
passing the partially cooled deposited aerated chocolate composition to a second zone of the two zone cooler;
wherein the first zone of the two-zone cooler has a temperature of about 5°C to about 20°C, preferably about 4°C to about 10°C, more preferably about 6°C to about 8°C, most preferably about 7°C; and the second zone of the two-zone cooler has a temperature of about 5°C to about 20°C, preferably about 4°C to about 15°C, more preferably about 6°C to about 12°C, most preferably about 10°C;

Preferably, the second zone has a lower temperature that the first zone.

### Aerated product

In one embodiment, the porosity (as defined above) of the non-moulded aerated chocolate product is from about 20% to about 70%, preferably from about 25% to about 65%, more preferably from about 40% to about 60%, most particularly from about 42.5% to about 55%, and particularly about 45%. Alternatively in any embodiment of the process, the porosity may be: from about: 30% to about 54%, about 35% to about 53%, about 40% to about 50%, more particularly from about 42% to about 48%. In one preferred embodiment, the non-moulded aerated chocolate product is macro-aerated. Preferably, according to any embodiment of the process, the non-moulded aerated chocolate product is macro-aerated.

The non-moulded aerated chocolate product may be of any particular shape, size, or weight. In a preferred embodiment, the non-moulded aerated chocolate product has a weight of from about 0.5 g to about 4 g, more preferably from about 1 g to about 3 g, most preferably from about 1.5 g to about 2.5 g, and particularly about 2 g.

In a preferred embodiment, the non-moulded aerated chocolate product is in the form of a chocolate button. Hence, the non-moulded aerated chocolate product is substantially circular in shape. In such an embodiment, it is particularly preferred that the substantially circular non-moulded aerated chocolate product has a diameter of from 15 to 40 mm, more preferably from about 20 mm to about 30 mm, and most preferably from about 25 mm to about 27 mm.

In another preferred embodiment, the non-moulded aerated chocolate product does not comprise a non-aerated shell, such as a non-aerated chocolate shell.

Preferably, the method of the invention further comprises a step of packaging the non-moulded aerated chocolate product, i.e. the non-moulded chocolate product produced by the process of the invention is the final product ready for packaging.

The non-moulded aerated chocolate product may be obtained by the process of the invention disclosed above.

### Examples

The present invention will be further understood by the following examples. The examples are illustrative in nature, and are not intended in any way to limit the scope of the present disclosure.

### Example 1

A Sollich Turbo Top was used to temper chocolate. The temperer was run at 80Kg/hr, ensuring good supply of tempered chocolate to the aerator, which was of the type disclosed in WO 2005/063036. Target temper index was between 5-7, with some fluctuations noted when topping up the temperer with fresh chocolate. Temper index was regularly measured, the sample taken from the temperer outlet.

The aerator was run consistently at a feed pump speed of 30RPM and a take off pump speed of 40RPM. Deposit time onto the moving belt surface was adjusted to target an aerated chocolate button weight of 2g (based on the average of 10 deposits) and a delay of 450ms was found to give optimal distribution of buttons on the moving belt.

The deposited aerated chocolate was passed to a two-zone cooler for cooling, each zone controllable from 5-20°C with the choice of direct (cooling air blown over the product) or indirect cooling. The parameters used in the example run are shown in Table 1 below:

**Table 1**

| **Parameter** | **Value/Range** |
|---|---|
| Aerator Feed Pump Speed (RPM) | 30 |
| Aerator Take Off Pump Speed (RPM) | 40 |
| Beater Speed (RPM) | 100 |
| Porosity (%) | 42.3 - 47.25 |
| Depositor Enclosure Temperature (°C) | 30 |
| Moving Belt Speed (mpm) | 4.5 |
| Cooling Zone 1 (5 to 20°C) | 10 |
| Cooling Zone 2 (5 to 20°C) | 7 |
| Vibration (%) | 30 - 40 |
| Temper Index Range | 5.4 - 7.8 |
| Crystallisation Temperature Range (°C) | 21.8 - 22.6 |
| Button Diameter (mm) | 25 - 27 |
| Beater Pressure (bar) | 6.9 - 7.3 (690 - 730 kPa) |
| Deposit Delay (ms) | 450 |
| Deposit Time (ms) | 52 - 62 |

100 buttons from this example were measured to understand the level of variability in terms of weight and maximum/minimum dimensions, as shown in Table 2 below. Calipers were used to measure the buttons to ensure a higher degree of accuracy.

**Table 2**

| | **Weight (g)** | **Narrowest Point (mm)** | **Widest Point (mm)** |
|---|---|---|---|
| Average | 2.00 | 24.59 | 26.36 |
| Standard Deviation | 0.04 | 0.37 | 0.42 |
| Minimum | 1.91 | 23.83 | 25.13 |
| Maximum | 2.19 | 25.59 | 27.87 |

As can be seen, the process of the invention enabled the production of aerated chocolate buttons without using a mould but still of consistent product shape and size.

It is seen that the present invention provides a button without a significant "tail" as produced by standard processes involving a piston depositor and no elimination through depositor motion/high belt vibration is required.

### Example 2

In order to optimise the process of Example 1, the following parameters were applied. The outlet orifice of the nozzle has a length of 5 mm and a diameter of 2.5 mm and the nozzle is position so that the aerated chocolate composition is deposited onto the belt surface at a height about 70 mm.

The parameters used in the example run are shown in Table 3 below:

**Table 3**

| **Parameter** | **Value/Range** |
|---|---|
| Aerator Feed Pump Speed (RPM) | 80 |
| Aerator Take Off Pump Speed (RPM) | 130 |
| Beater Speed (RPM) | 375 |
| Porosity (%) | 42.3 - 47.25 |
| Depositor Enclosure Temperature (°C) | 30 |
| Moving Belt Speed (mpm) | 4 |
| Cooling Zone 1 (5 to 20°C) | 10 |
| Cooling Zone 2 (5 to 20°C) | 7 |
| Vibration (%) | 20 - 35 |
| Temper Index Range | 5.4 - 7.8 |
| Crystallisation Temperature Range (°C) | 21.8 - 22.6 |
| Button Diameter (mm) | 26.56 - 29.66 |
| Beater Pressure (bar) | 7.2 - 7.3 |
| Deposit Delay (ms) | 780 (2 rows) |
| Deposit Time (ms) | 50 - 56 |

The use of these deposition conditions were found to further reduce the appearance of any dark spots on the final products, i.e. further reducing the formation and impact of any "tail" in this process. These findings are highly advantageous, as mentioned above, the normal production method utilized for button production uses vibration to remove the "tail" and this process is not applicable for aerated products.

## Claims

1. A process for preparing a non-moulded aerated chocolate product, comprising:
aerating a chocolate composition in an aerator operating under a positive pressure of from about 500 kPa (5 bar) to about 1200 kPa (12 bar) to provide an aerated chocolate composition;
passing the aerated chocolate composition from the aerator to a depositor operating under a positive pressure, wherein the depositor comprises at least one nozzle comprising an outlet orifice for depositing the aerated chocolate composition, wherein the depositor is configured to allow the reversible opening and closing of the outlet orifice;
opening the outlet orifice for a predetermined deposit time period to deposit a portion of the aerated chocolate composition through the outlet orifice onto a surface, wherein the aerated chocolate composition is deposited onto the surface at a height of from about 40 mm to about 100 mm; and
allowing the deposited aerated chocolate composition to expand under atmospheric pressure and cooling to form the non-moulded aerated chocolate product, wherein the cooling step comprises:
passing the deposited aerated chocolate composition to the first zone of a two zone cooler to form a partially cooled deposited aerated chocolate composition; and
passing the partially cooled deposited aerated chocolate composition to a second zone of the two zone cooler;
wherein the first zone of the two-zone cooler has a temperature of about 5°C to about 20°C, preferably about 4°C to about 10°C, more preferably about 6°C to about 8°C, most preferably about 7°C; and the second zone of the two-zone cooler has a temperature of about 5°C to about 20°C, preferably about 4°C to about 15°C, more preferably about 6°C to about 12°C, most preferably about 10°C.

2. A process according to claim 1, wherein the aerator operates under a positive pressure of from about 6 bar to about 12 bar, more preferably from about 7 bar to about 12 bar.

3. A process according to any preceding claim, wherein the depositor operates under a positive pressure of from about 5 bar to about 12 bar, preferably from about 6 bar to about 12 bar, more preferably from about 7 bar to about 12 bar.

4. A process according to any preceding claim, wherein the depositor operates under substantially the same pressure as the aerator.

5. A process according to any preceding claim, wherein the outlet orifice has a length of from about 2 mm to about 8 mm, preferably from about 3 mm to about 7 mm, more preferably from about 4 mm to about 6 mm, and particularly about 5 mm.

6. A process according to any preceding claim, wherein the outlet orifice has a diameter of from about 1 mm to about 4 mm, preferably from about 1.5 mm to about 3.5 mm, more preferably from about 2 mm to about 3 mm, and particularly about 2.5 mm.

7. A process according to any preceding claim, wherein the deposit time period is about 20 milliseconds to about 90 milliseconds, preferably from about 30 milliseconds to about 80 milliseconds, more preferably from about 40 milliseconds to about 60 milliseconds, and particularly from about 50 milliseconds to about 60 milliseconds.

8. The process of any preceding claim, wherein the depositor is not a piston depositor.

9. A process according to any preceding claim, wherein the porosity of the non-moulded aerated chocolate product is from about 20% to about 70%, preferably from about 25% to about 65%, more preferably from about 40% to about 60%, or from about 40 to about 50%, or about 42.5% to about 55%, or most preferably from about 42% to 48%, and particularly about 45%.

10. A process according to any preceding claim, wherein the non-moulded aerated chocolate product is macro-aerated, wherein the air bubbles have an average diameter of 100 microns or above.

11. A process according to any preceding claim wherein the non-moulded aerated chocolate product is substantially circular in shape.

12. A process according to any preceding claim, wherein the non-moulded aerated chocolate product does not comprise a non-aerated shell or layer.

13. A process according to any preceding claim, wherein the surface is substantially flat, preferably wherein the surface is a moving belt.

14. A process according to claim 13, wherein the moving belt has a belt speed of about 0.1 metres per minute to about 10 metres per minute, preferably of about 1 metre per minute to about 8 metres per minute, more preferably of about 2 metres per minute to about 7 metres per minute, most preferably of about 3 metres per minute to about 5 metres per minute.

15. A process according to any preceding claim, wherein the non-moulded aerated chocolate product is a non-moulded chocolate confectionery product.

16. A process according to any preceding claim, wherein the chocolate composition is a tempered chocolate composition.

17. A process according to claim 16, wherein the temper index of the tempered chocolate composition is about 3 to about 9, preferably from about 4 to about 8, more preferably from about 5 to about 8.

18. A process according to claim 16 or claim 17, wherein the crystallisation temperature range of the tempered chocolate composition is from about 15°C to about 30°C, preferably from about 18°C to about 27°C, more preferably from about 20°C to about 25°C, and particularly from about 21°C to about 23°C.

## Patentansprüche

1. Verfahren zum Herstellen eines nicht geformten belüfteten Schokoladenprodukts, umfassend:
Belüften einer Schokoladenzusammensetzung in einer Belüftungseinrichtung, die unter einem positiven Druck von etwa 500 kPa (5 bar) bis etwa 1200 kPa (12 bar) arbeitet, um eine belüftete Schokoladenzusammensetzung bereitzustellen;
Weiterleiten der belüfteten Schokoladenzusammensetzung von der Belüftungseinrichtung zu einer Abgabeeinrichtung, die unter einem positiven Druck arbeitet, wobei die Abgabeeinrichtung mindestens eine Düse, umfassend eine Auslassöffnung zum Abgeben der belüfteten Schokoladenzusammensetzung, umfasst, wobei die Abgabeeinrichtung konfiguriert ist, um das reversible Öffnen und Schließen der Auslassöffnung zu ermöglichen;
Öffnen der Auslassöffnung für eine zuvor bestimmte Abgabezeitspanne, um einen Teil der belüfteten Schokoladenzusammensetzung durch die Auslassöffnung auf eine Oberfläche abzugeben, wobei die belüftete Schokoladenzusammensetzung auf die Oberfläche in einer Höhe von etwa 40 mm bis etwa 100 mm abgegeben wird; und
Ermöglichen, dass sich die abgegebene belüftete Schokoladenzusammensetzung unter atmosphärischem Druck ausdehnt und abkühlt, um das nicht geformte belüftete Schokoladenprodukt auszubilden, wobei der Kühlschritt umfasst:
Weiterleiten der abgegebenen belüfteten Schokoladenzusammensetzung zu der ersten Zone eines Zweizonenkühlers, um eine teilweise gekühlte abgegebene belüftete Schokoladenzusammensetzung auszubilden; und
Weiterleiten der teilweise gekühlten abgegebenen belüfteten Schokoladenzusammensetzung zu einer zweiten Zone des Zweizonenkühlers;
wobei die erste Zone des Zweizonenkühlers eine Temperatur von etwa 5 °C bis etwa 20 °C, vorzugsweise etwa 4 °C bis etwa 10 °C, mehr bevorzugt etwa 6 °C bis etwa 8 °C, am meisten bevorzugt etwa 7 °C, aufweist; und die zweite Zone des Zweizonenkühlers eine Temperatur von etwa 5 °C bis etwa 20 °C, vorzugsweise etwa 4 °C bis etwa 15 °C, mehr bevorzugt etwa 6 °C bis etwa 12 °C, am meisten bevorzugt etwa 10 °C, aufweist.

2. Verfahren nach Anspruch 1, wobei die Belüftungseinrichtung unter einem positiven Druck von etwa 6 bar bis etwa 12 bar, mehr bevorzugt von etwa 7 bar bis etwa 12 bar, arbeitet.

3. Verfahren nach einem der vorstehenden Ansprüche, wobei die Abgabeeinrichtung unter einem positiven Druck von etwa 5 bar bis etwa 12 bar, vorzugsweise von etwa 6 bar bis etwa 12 bar, mehr bevorzugt von etwa 7 bar bis etwa 12 bar, arbeitet.

4. Verfahren nach einem der vorstehenden Ansprüche, wobei die Abgabeeinrichtung im Wesentlichen unter dem gleichen Druck wie die Belüftungseinrichtung arbeitet.

5. Verfahren nach einem der vorstehenden Ansprüche, wobei die Auslassöffnung eine Länge von etwa 2 mm bis etwa 8 mm, vorzugsweise von etwa 3 mm bis etwa 7 mm, mehr bevorzugt von etwa 4 mm bis etwa 6 mm und insbesondere etwa 5 mm aufweist.

6. Verfahren nach einem der vorstehenden Ansprüche, wobei die Auslassöffnung einen Durchmesser von etwa 1 mm bis etwa 4 mm, vorzugsweise von etwa 1,5 mm bis etwa 3,5 mm, mehr bevorzugt von etwa 2 mm bis etwa 3 mm und insbesondere etwa 2,5 mm aufweist.

7. Verfahren nach einem der vorstehenden Ansprüche, wobei die Abgabezeitspanne etwa 20 Millisekunden bis etwa 90 Millisekunden, vorzugsweise von etwa 30 Millisekunden bis etwa 80 Millisekunden, mehr bevorzugt von etwa 40 Millisekunden bis etwa 60 Millisekunden und insbesondere von etwa 50 Millisekunden bis etwa 60 Millisekunden beträgt.

8. Verfahren nach einem der vorstehenden Ansprüche, wobei die Abgabeeinrichtung keine Kolbenabgabeeinrichtung ist.

9. Verfahren nach einem der vorstehenden Ansprüche, wobei die Porosität des nicht geformten belüfteten Schokoladenprodukts von etwa 20 % bis etwa 70 %, vorzugsweise von etwa 25 % bis etwa 65 %, mehr bevorzugt von etwa 40 % bis etwa 60 % oder von etwa 40 bis etwa 50 % oder etwa 42,5 % bis etwa 55 % oder am meisten bevorzugt von etwa 42 % bis 48 % und insbesondere etwa 45 % beträgt.

10. Verfahren nach einem der vorstehenden Ansprüche, wobei das nicht geformte belüftete Schokoladenprodukt makrobelüftet ist, wobei die Luftblasen einen durchschnittlichen Durchmesser von 100 Mikron oder darüber aufweisen.

11. Verfahren nach einem der vorstehenden Ansprüche, wobei das nicht geformte belüftete Schokoladenprodukt im Wesentlichen kreisförmig in seiner Gestalt ist.

12. Verfahren nach einem der vorstehenden Ansprüche, wobei das nicht geformte belüftete Schokoladenprodukt keine nicht belüftete Hülle oder Schicht umfasst.

13. Verfahren nach einem der vorstehenden Ansprüche, wobei die Oberfläche im Wesentlichen flach ist, wobei die Oberfläche vorzugsweise ein sich bewegendes Band ist.

14. Verfahren nach Anspruch 13, wobei das sich bewegende Band eine Bandgeschwindigkeit von etwa 0,1 Metern pro Minute bis etwa 10 Metern pro Minute, vorzugsweise von etwa 1 Meter pro Minute bis etwa 8 Metern pro Minute, mehr bevorzugt von etwa 2 Metern pro Minute bis etwa 7 Metern pro Minute, am meisten bevorzugt von etwa 3 Metern pro Minute bis etwa 5 Metern pro Minute, aufweist.

15. Verfahren nach einem der vorstehenden Ansprüche, wobei das nicht geformte belüftete Schokoladenprodukt ein nicht geformtes Schokoladenkonfektprodukt ist.

16. Verfahren nach einem der vorstehenden Ansprüche, wobei die Schokoladenzusammensetzung eine temperierte Schokoladenzusammensetzung ist.

17. Verfahren nach Anspruch 16, wobei der Temperierindex der temperierten Schokoladenzusammensetzung etwa 3 bis etwa 9, vorzugsweise von etwa 4 bis etwa 8, mehr bevorzugt von etwa 5 bis etwa 8, beträgt.

18. Verfahren nach Anspruch 16 oder Anspruch 17, wobei der Kristallisationstemperaturbereich der temperierten Schokoladenzusammensetzung von etwa 15 °C bis etwa 30 °C, vorzugsweise von etwa 18 °C bis etwa 27 °C, mehr bevorzugt von etwa 20 °C bis etwa 25 °C und insbesondere von etwa 21 °C bis etwa 23 °C beträgt.

## Revendications

1. Procédé de préparation d'un produit au chocolat aéré non moulé, comprenant :
l'aération d'une composition au chocolat dans un aérateur fonctionnant sous une pression positive d'environ 500 kPa (5 bars) à environ 1 200 kPa (12 bars) pour fournir une composition au chocolat aérée ;
le passage de la composition au chocolat aérée de l'aérateur vers un déposant fonctionnant sous une pression positive, dans lequel le déposant comprend au moins une buse comprenant un orifice de sortie permettant de déposer la composition au chocolat aérée, dans lequel le déposant est conçu pour permettre l'ouverture et la fermeture réversibles de l'orifice de sortie ;
l'ouverture de l'orifice de sortie pendant une période de temps de dépôt prédéterminée pour déposer une partie de la composition au chocolat aérée à travers l'orifice de sortie sur une surface, dans lequel la composition au chocolat aérée est déposée sur la surface à une hauteur d'environ 40 mm à environ 100 mm ; et
le fait de permettre à la composition au chocolat aérée déposée de se dilater sous la pression atmosphérique et le refroidissement pour former le produit au chocolat aéré non moulé, dans lequel l'étape de refroidissement comprend :
le passage de la composition au chocolat aérée déposée dans la première zone d'un refroidisseur à deux zones pour former une composition au chocolat aérée déposée partiellement refroidie ; et
le passage de la composition au chocolat aérée déposée partiellement refroidie dans une seconde zone du refroidisseur à deux zones ;
dans lequel la première zone du refroidisseur à deux zones a une température d'environ 5 °C à environ 20 °C, de préférence d'environ 4 °C à environ 10 °C, plus préférablement d'environ 6 °C à environ 8 °C, le plus préférablement d'environ 7 °C ; et la seconde zone du refroidisseur à deux zones a une température d'environ 5 °C à environ 20 °C, de préférence d'environ 4 °C à environ 15 °C, plus préférablement d'environ 6 °C à environ 12 °C, le plus préférablement d'environ 10 °C.

2. Procédé selon la revendication 1, dans lequel l'aérateur fonctionne sous une pression positive allant d'environ 6 bar à environ 12 bar, plus préférablement d'environ 7 bar à environ 12 bar.

3. Procédé selon l'une quelconque revendication précédente, dans lequel le déposant fonctionne sous une pression positive allant d'environ 5 bar à environ 12 bar, de préférence d'environ 6 bar à environ 12 bar, plus préférablement d'environ 7 bar à environ 12 bar.

4. Procédé selon l'une quelconque revendication précédente, dans lequel le déposant fonctionne sensiblement sous la même pression que l'aérateur.

5. Procédé selon l'une quelconque revendication précédente, dans lequel l'orifice de sortie a une longueur allant d'environ 2 mm à environ 8 mm, de préférence d'environ 3 mm à environ 7 mm, plus préférablement d'environ 4 mm à environ 6 mm, et en particulier d'environ 5 mm.

6. Procédé selon l'une quelconque revendication précédente, dans lequel l'orifice de sortie a un diamètre allant d'environ 1 mm à environ 4 mm, de préférence d'environ 1,5 mm à environ 3,5 mm, plus préférablement d'environ 2 mm à environ 3 mm, et en particulier d'environ 2,5 mm.

7. Procédé selon l'une quelconque revendication précédente, dans lequel la période de temps de dépôt est d'environ 20 millisecondes à environ 90 millisecondes, de préférence d'environ 30 millisecondes à environ 80 millisecondes, plus préférablement d'environ 40 millisecondes à environ 60 millisecondes, et en particulier d'environ 50 millisecondes à environ 60 millisecondes.

8. Procédé selon l'une quelconque revendication précédente, dans lequel le déposant n'est pas un déposant à piston.

9. Procédé selon l'une quelconque revendication précédente, dans lequel la porosité du produit au chocolat aéré non moulé va d'environ 20 % à environ 70 %, de préférence d'environ 25 % à environ 65 %, plus préférablement d'environ 40 % à environ 60 %, ou d'environ 40 à environ 50 %, ou d'environ 42,5 % à environ 55 %, ou le plus préférablement d'environ 42 % à 48 %, et en particulier d'environ 45 %.

10. Procédé selon l'une quelconque revendication précédente, dans lequel le produit au chocolat aéré non moulé est macro-aéré, dans lequel les bulles d'air ont un diamètre moyen de 100 microns ou plus.

11. Procédé selon l'une quelconque revendication précédente, dans lequel le produit au chocolat aéré non moulé est de forme sensiblement circulaire.

12. Procédé selon l'une quelconque revendication précédente, dans lequel le produit au chocolat aéré non moulé ne comprend pas d'enveloppe ou de couche non aérée.

13. Procédé selon l'une quelconque revendication précédente, dans lequel la surface est sensiblement plate, de préférence dans lequel la surface est une courroie mobile.

14. Procédé selon la revendication 13, dans lequel la courroie mobile a une vitesse de courroie d'environ 0,1 mètre par minute à environ 10 mètres par minute, de préférence d'environ 1 mètre par minute à environ 8 mètres par minute, plus préférablement d'environ 2 mètres par minute à environ 7 mètres par minute, le plus préférablement d'environ 3 mètres par minute à environ 5 mètres par minute.

15. Procédé selon l'une quelconque revendication précédente, dans lequel le produit au chocolat aéré non moulé est un produit de confiserie au chocolat non moulé.

16. Procédé selon l'une quelconque revendication précédente, dans lequel la composition au chocolat est une composition au chocolat tempérée.

17. Procédé selon la revendication 16, dans lequel l'indice de tempérance de la composition au chocolat tempérée va d'environ 3 à environ 9, de préférence d'environ 4 à environ 8, plus préférablement d'environ 5 à environ 8.

18. Procédé selon la revendication 16 ou la revendication 17, dans lequel la plage de température de cristallisation de la composition au chocolat tempérée va d'environ 15 °C à environ 30 °C, de préférence d'environ 18 °C à environ 27 °C, plus préférablement d'environ 20 °C à environ 25 °C, et en particulier d'environ 21 °C à environ 23 °C.
